# EUROPEAN PATENT APPLICATION

(11) **EP 2 343 401 A1**
(43) Date of publication of application: **13.07.2011**
(21) Application number: 10192348.0
(22) Date of filing: 24.11.2010
(51) Int. Cl.: C25D 11/26, F01D 5/28, C25D 11/18

(54) **Hydrophobic surface**

(30) Priority: 22.12.2009 GB 0922308
(71) Applicant: Rolls-Royce plc, London SW1E 6AT (GB)
(72) Inventor: Lambourne, Alexis, Belper, Derbyshire DE56 1BD (GB); Critchlow, Gary, Loughborough, Leicestershire LE11 2HH (GB)
(74) Representative: Roberts, Nicholas John

(57) **Abstract**

An article has an anodised titanium or titanium alloy surface layer containing pores which form recesses opening to the outside of the layer. A wetting-resistant coating is formed on the anodised surface layer. The coating penetrates the pores but retains the recesses to make the surface of the article hydrophobic and thereby restrict accumulation of ice.

## Description

The present invention relates to an article having a hydrophobic surface to restrict accumulation of ice.

Hydrophobic and super-hydrophobic surfaces have applications in numerous fields. For example, airframe and aeroengine components can be susceptible to ice build up. Providing hydrophobic or super-hydrophobic surfaces on such components can increase the run off of undercooled water droplets allowing them to re-entrain into the airflow before they nucleate and freeze. The surfaces can also alter the nucleation density and growth morphology of the ice that does form on the surfaces.

Thus a benefit of such surfaces is that they can reduce the rate of ice accretion on a surface and alter the morphology of the ice to a structure that is more readily and predictably shed.

Several polymer-based commercial coatings are available which are specifically designed to generate high water contact angles in order to improve ice shedding behaviour. For example, Luna Innovations Inc. have developed a superhydrophobic coating that can be spray coated onto large areas. Also available is HiRec 1450, a superhydrophobic coating that imparts both a nanoscale topography (from a nano-dispersion of PTFE spheres) and a chemical functionality (from a fluoropolymer) to give very large contact angles. However, both of these coatings are conceived for static applications that are subject to environmental icing, such as microwave antennae, aerials, satellite dishes, etc., and may not be able to withstand the erosive forces to which airframe and aeroengine components can be subject. For example, in gas turbines air speeds can be in the range 100-200 m/s. Fine (about 20µm) water droplets are rapidly accelerated by the air and impact e.g. the fan, engine section stator vanes and variable inlet guide vanes with considerable force. Polymer based coating systems are likely to erode rapidly, losing the superhydrophobic properties of the coating.

US 2008/145528 describes a method of applying a nano-textured surface to a metallic substrate using a metallic braze as the binder for ceramic nanoparticles. The textured braze is then overlaid with an appropriate fluorocarbon or hydrocarbon coating in order to impart a high water contact angle.

Although this is an attempt to provide a nano-textured surface that is robust enough to survive in the harsh operating environment of a gas turbine intake, there are several disadvantages to using a braze.

Firstly, brazing is a high temperature process that involves melting or partially melting a metal on the surface of the substrate. Such processes can alter the microstructure of the underlying substrate by altering the grain size due to local annealing and/or surface alloying as the braze melts or diffuses into the substrate.

Secondly, the application of a braze interspersed with hard, brittle ceramic particles may undermine the fatigue life of a component, as the ceramic particles can act as local stress raisers and crack under load. Once a crack is initiated, it can continue to grow through the braze and substrate during subsequent stress cycles.

Thus, there remains a need for wetting-resistant surface treatments that can withstand the harsh environment found in e.g. a gas turbine intake.

According to a first aspect of the invention, there is provided an article having:
an anodised titanium or titanium alloy surface layer containing pores which form recesses opening to the outside of the layer, and
a wetting-resistant coating formed on the anodised surface layer, the coating penetrating the pores but retaining the recesses to make the surface of the article hydrophobic and thereby restrict accumulation of ice.

By having an anodised alloy surface layer containing pores which form recesses opening to the outside of the layer, surface textures can be formed which reduces the amount of intimate surface contact between a water droplet and the surface. For example, the area fraction of the surface in actual contact with the water droplet may be reduced because the water droplet may not penetrate the recesses. In combination with the wetting-resistant coating, this can lead to a hydrophobic surface which restricts accumulation of ice. However, as the textured surface does not require the incorporation of interspersed hard brittle materials, such as ceramic particles, or brazing, problems of surface crack initiation and growth, and microstructural alteration can be avoided or reduced.

The article may include any one or any combination of the following optional features.

Preferably the anodised surface layer has roughness on both a nano length scale and micro length scale. Such dual scale roughness is believed to improve surface hydrophobicity.

The pores can occupy at least 30 volume %, and preferably at least 70%, of the anodised surface layer. Particularly when the pores occupy a high volume percent of the anodised surface layer, the layer may comprise a pattern of (e.g. columnar) asperities of anodised oxide surrounded by interconnected open porosity.

The anodised surface layer may have a thickness in the range from 2nm to 2µm. Preferably the pores extend transversely across the layer from its outer surface to its inner interface. When the layer comprises a pattern of (e.g. columnar) asperities of anodised oxide surrounded by interconnected open porosity, the average spacing between nearest-neighbour asperities may be in the range from 1 to 50nm.

The wetting-resistant coating may have a thickness of at least 0.5 nm, and preferably of at least 10nm. The wetting resistant coating may follow the contour of the pores.

Preferably the hydrophobic surface is superhydrophobic.

The wetting-resistant coating may comprise a fluorinated polymer.

The fluorinated polymer may be a poly(haloalkylene) polymer, or a polymer comprising poly(haloalkylene). Preferably the fluorinated polymer is a poly(haloalkylene) polymer. The polymer may be linear or branched, and may be crosslinked.

The haloalkylene may be an alkylene group substituted with one or more halo groups. Preferably, the haloalkylene is an alkylene group substituted with at least two halo groups.

The haloalkylene group may be linear or branched, where appropriate.

The haloalkylene may be a perhaloalkylene, where each hydrogen group in a alkylene is formally replaced with a halo group, as for example, in FEP (perfluoro(ethylene/propylene) and poly(tetrafluoroethylene).

The halo group may be fluoro and/or chloro.

The poly(haloalkylene) may comprise one, two or three different haloalkylene units. Where the polymer comprises two of more different alkylene units, these units may be arranged within the polymer in any arrangement, including block, random, periodic and alternate arrangements. The haloalkylene units may differ with regards to the number and/or nature of the halo group, and/or the identity of the alkylene group.

Preferably, the polymer comprises one or more ethylene and/or propylene units.

The fluorinated polymer may be selected from poly(tetrafluoroethylene) (PTFE), poly(perfluoro(ethylene/propylene) (FEP), poly(chlorotrifluoroethylene) (PCTFE) or poly(hexafluoropropylene).

Preferably, the coating comprises poly(tetrafluoroethylene).

Additionally or alternatively the wetting-resistant coating may comprise organosilesquioxane.

Organosilesquioxanes are silicon-oxygen based frameworks having the general formula (RSiO₁.₅)ₙ in which n is an even number ≥ 2, and preferably ≥ 4. Organosilesquioxane having an odd number of silicon atoms are also available, including those having 7 silicon atoms, such as frameworks of formula R₇Si₇O₉(OH)₃. Organosilesquioxanes which have a very specific structure, for example a compound having the formula (RSiO_{1.5})₈ has an octahedral cage structure, are referred to in the field as organooligosilsequioxanes or polyhedral oligomeric silsesquiloxanes. Other examples include those compounds where n is 10 or 12.

R is at least one organic group and may optionally include a hydrogen group. Preferably the organic group is selected from optionally substituted alkyl (including cycloalkyl and aliphatic alkyl), optionally substituted alkenyl, optionally substituted alkynyl, optionally substituted aryl (including carboaryl and heteroaryl), optionally substituted heterocyclyl, halo, amide, ester, amino, phosphine, nitrile, cyanato and isocyanato, mercapto, anhydride, and mixtures thereof.

The R group may be selected so as to provide an organosilesquioxane that is liquid at ambient temperature. Such organosilesquioxane allow easy application of the organosilesquioxane as a coating composition.

The R group is preferably stable to hydrolysis.

The organic group may be selected from optionally substituted alkyl, optionally substituted aryl, halo and ester. The organic group may be selected from optionally substituted alkyl, optionally substituted aryl, halo and methacrylate. The organic group may be selected from methyl, phenyl, and methacrylate.

The organic group may be or comprise a halo group. The halo group may be fluorine. Where the organic group is substituted with a halo group, such as a fluoro group, the organosilesquioxane is said to comprise halogenated organic groups, such as fluorinated organic groups.

The water contact angle of the surface may be increased and/or the surface energy may be lowered by incorporation of a halo atom into the organic group of the organosilesquioxane.

The organic group may be an alkyl group substituted with one, or more, halo groups, preferably substituted with one or more fluoro groups, most preferably three fluoro groups. Such groups may be referred to as haloalkyl groups. For example, the alkyl group may be a fluoroalkyl group, such as a trifluoropropyl group. In a preferred embodiment, the organic group is a 3,3,3-trifluoropropyl group.

The alkyl group may be a perhaloalkyl group, preferably a perfluoroalkyl group, and most preferably a perfluorooctyl group.

The organosilesquioxane may be a crosslinked organosilesquioxane. The crosslinks may be formed between organic groups in the organosilesquioxane. Additionally or alternatively the crosslinks may be formed between residual silanol groups in the organosilesquioxane.

Organosilesquioxanes may comprise two or more different organic groups. Such organosilesquioxanes may be prepared from monomer starting materials having different organic groups as is known in the art.

The organosilesquioxane may comprise an alkyl group substituted with one, or more, halo groups and an ester group.

The organosilesquioxane may comprise a haloalkyl group, such as a perfluorooctyl group, and a methacrylate group. For example, the organosilesquioxane may formed by replacing about 3% of methacrylate groups with perfluorooctyl groups.

Suitable organosilesquioxanes for use in the wetting-resistant coating include those available under the name Vitolane (TM) from TWI, Cambridge, UK. Also suitable are the POSS (TM) range of organosilesquioxanes available from Hybrid Plastics, Hattiesburg, MS, USA.

The manufacture and modification of organosilesquioxanes is described in WO 2007/060387 and the references cited therein, which are incorporated by reference herein.

The organosilesquioxane may also be used as a component of a wetting-resistant coating.

Additionally or alternatively, the wetting-resistant coating may comprise a silicone rubber. Generally, a silicone rubber is a polysiloxane, such as a poly(disubstitutedsiloxane). Suitable substituents may include optionally substituted alkyl, heterocyclyl and aryl groups. The substituent may be an optionally substituted heterocyclyl group, for example an epoxy (oxirane) group.

Additionally or alternatively, the wetting-resistant coating may comprise a halogenated silane. Preferably, the halogenated silane is a fluorinated silane. The silane may be a silane of formula SiR'₄, where each R' is independently selected from halo and optionally substituted alkyl, heterocyclyl and aryl, wherein at least one group R' is halo, and at least one group R' is selected from optionally substituted alkyl, heterocyclyl and aryl.

R' may be selected from alkyl, heterocyclyl and aryl having one or more halo substituents, and optionally further substituted.

Preferably, R' is independently selected from halo and optionally substituted alkyl.

Preferably the alkyl group is alkyl having one or more halo substituents, and optionally further substituted. In one embodiment, the alkyl group is a perhaloalkyl group.

The halo group may be fluoro and/or chloro.

The silane may be perfluorodecyltrichlorosilane.

Preferably, the R' group is selected so as to provide a silane that is liquid at ambient temperature. Such silanes allow easy application of the silane by penetration into the pores of the anodised surface.

The silane may be chemically bonded to the surface of the porous anodised titanium or titanium alloy surface layer using curing techniques well known in the art.

The article may be an article that is susceptible in use to ice build-up.

The article may be a component of a gas turbine engine. For example, the component may be a fan blade, a compressor inlet guide vane (such as a VIGV (variable inlet guide vane) or ESS (engine section stator)), a fan outlet guide vane, a compressor blade or a compressor vane (such as a VSV (variable stator vane)).

The article may be a component of an aircraft, such as a wing leading edge, control surface, landing gear. The article may be a propeller on an open rotor engine or on a turbo-prop engine.

Indeed, the article may be any component or structure that is susceptible to unwanted ice accretion, such as an item of ship superstructure or deck machinery (for ships operating in extreme northerly or southerly latitudes), satellite dishes, telecommunication aerials, radar domes, wind turbine components (e.g. blade pitching mechanisms, anenometers, instrumentation packs) structures operating at high altitude (e.g. airship, hot air balloon, unmanned air vehicle or rocket structures,), titanium heat exchangers prone to icing (e.g. a liquid nitrogen liquid-to-air heat exchanger for bulk N₂ gas supply), winter sports equipment (e.g. snow board or ski bindings, ice screws) etc.

Where the article is formed of steel, composite or another non-titanium material, it may be clad with titanium or titanium alloy (e.g. by diffusion bonding, adhesives etc) and then anodised and coated.

A second aspect of the invention provides a method of surface treating an article having a titanium or titanium alloy surface, the method comprising the steps of:
anodising the surface of the alloy to produce an anodised surface layer containing pores which form recesses opening to the outside of the layer, and
forming a wetting-resistant coating on the anodised surface layer, the coating penetrating the pores but retaining the recesses to make the surface hydrophobic and thereby restrict accumulation of ice.

Thus the method can be used to produce an article according to the previous aspect, the article optionally including any one or any combination of the optional features described above in relation to the first aspect.

The wetting-resistant coating can be formed by, for example, dipping, roll-coating, spraying or painting liquid or a solution containing the coating material onto the anodised surface layer. This can be followed by curing (e.g. thermal curing).

For example, a suspension of PTFE particles can be applied to the anodised surface layer (e.g. by immersing the article in the suspension), the PTFE particles infiltrating the pores, and the article can then be heated to fuse the infiltrating PTFE particles into a coating which penetrates the pores but retains the recesses.

Embodiments of the invention will now be described by way of example with reference to the accompanying drawings in which:
Figure 1 shows a longitudinal cross-section through the front of a gas turbine engine;
Figure 2 shows schematically a cross-section through the surface of a titanium component in the as machined and polished condition;
Figure 3 the cross-section of Figure 2 with a porous, anodised surface layer;
Figure 4 shows the cross-section of Figure 3 with PTFE nanoparticles penetrating the pores of the anodised surface layer; and
Figure 5 shows the cross-section of Figure 4 after the PTFE nanoparticles are sintererd to form a coating on the anodised surface layer;
Figure 6 shows the cross-section of Figure 5 with a water droplet on the treated surface; and
Figure 7 shows the cross-section of Figure 5 after the surface has been eroded.

The present invention, by providing an anodised titanium or titanium alloy surface layer with open pores and a wetting-resistant coating, can create a robust, engineered, hydrophobic or superhydrophobic surface.

The combination of the anodised surface layer and coating can generate the low surface energies required to impart very high water contact angles, and hence hydrophobicity or superhydrophobicity to the surface. These angles can be in excess of 120°. This type of surface treatment can impart good ice-phobic characteristics to gas turbine inlet components.

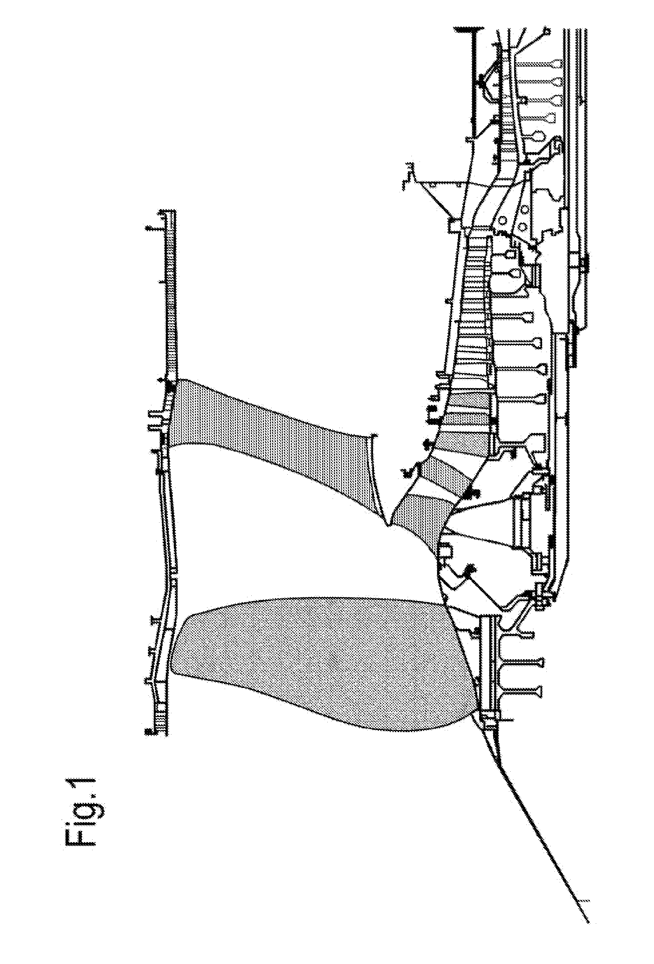

The surface treatment is well suited to titanium or titanium alloy components, or components which can be clad with titanium or titanium alloy used in gas turbines. For example, the surface treatment can encourage ice shedding on both rotating components (e.g. fan blades and compressor blades) and static components (e.g. engine section stators, variable inlet guide vanes, outlet guide vanes) which are susceptible to ice build-up. Such components are shaded in the schematic longitudinal cross-section through the front of a gas turbine engine shown in Figure 1. Advantageously, the improved ice shedding characteristics that can be achieved, allows these and associated components to be better optimised for aerodynamic performance and less consideration given to ice shedding and ice impact tolerance.

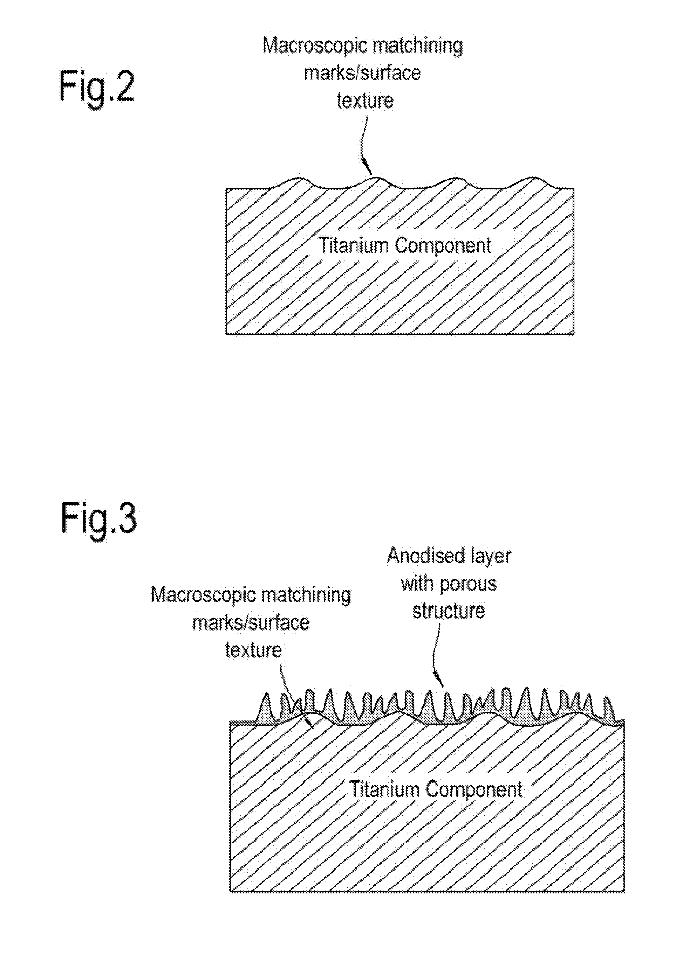

Figure 2 shows schematically a cross-section through the surface of a titanium component in the as machined and polished condition. The surface has some macroscopic texture.

A first stage in producing a hydrophobic surface is anodising the titanium substrate of the component. The component can be arranged to be the anode in a bath of anodising solution (typically Sulphuric or phosphoric acids or some mixture of these or sodium hydroxide) at room temperature (∼20°C). Anodising conditions can be arranged such that an oxide layer is grown with an open, porous structure as shown schematically in Figure 3, the pores forming recesses which open to the outside of the layer. This can be achieved by using an anodising voltage of between 1 and 75 Volts AC with higher voltages used for a thicker anodised layer or more rapid layer growth. In one embodiment the anodising voltage may be between 1 and 10 V , peak 20A. A voltage of 4V may be used.

The time required for anodising can be short. For example, 10 to 15 seconds of anodising can yield an anodised layer of 2 to 800nm thickness depending on the surface condition of the work piece. Generally the thickness varies linearly with the voltage applied and colour may provide an indication of coating thickness.

| Applied voltage (V) | Color | Calculated film thickness (A) |
|---|---|---|
| 3 | Silver | |
| 6 | Light brown | 241 |
| 10 | Golden brown | 362 |
| 15 | Purple blue | 491 |
| 20 | Dark blue | 586 |
| 25 | Sky blue | 702 |
| 30 | Pale blue | 815 |
| 35 | Steel blue | 926 |
| 40 | Lights slave | 1036 |
| 45 | Greenish yellow | 1147 |
| 50 | Lemon yellow | 1246 |
| 55 | Golden | 1319 |
| 60 | Pink | 1410 |
| 65 | Light purple | 1573 |
| 75 | blue | 1769 |

Longer times and progressive ramping of the voltage up to the set point may be necessary with some titanium alloys (e.g. those with a coarse second phase distribution and/or a thick oxide film). The anodising conditions can also be changed to produce desired oxide layer morphologies. For example, the amount of porosity can be controlled in this way. The oxide can be encouraged to adopt a columnar habit, the length, width and spacing of the columns being controlled by varying the anodising conditions.

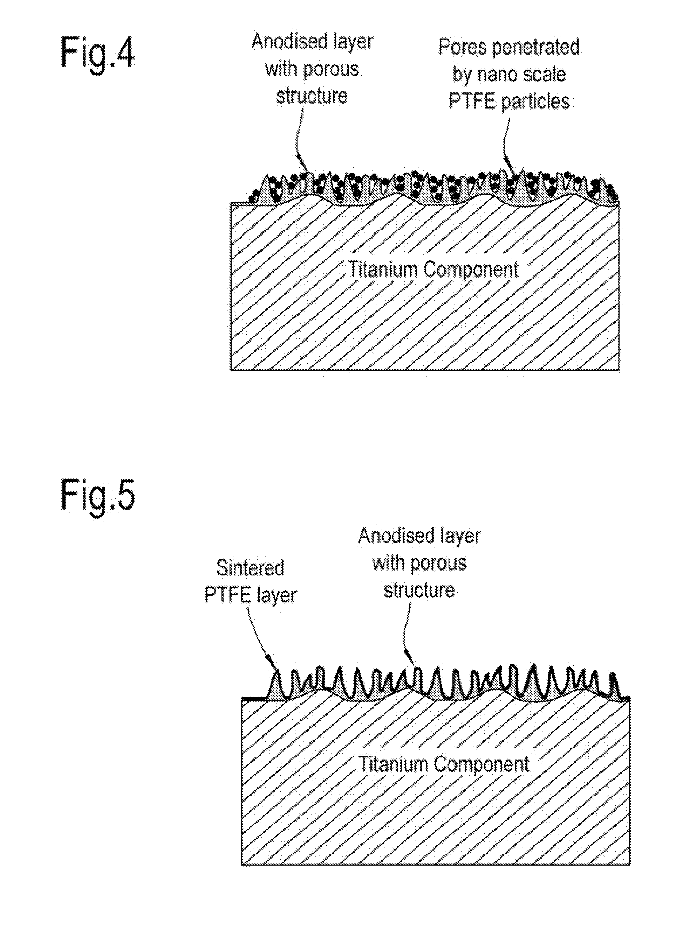

Next, the anodised component can be immersed in a bath containing a suspension of e.g. PTFE nanoparticles. The PTFE particle size distribution can be about 10 to 110nm (e.g. commercially available DuPont Zonyl MP5070A-N). Other particle diameters can be used appropriate to the pore size of the anodised oxide. The PTFE particles penetrate the pores of the oxide and remain entrapped in the pores when the material is removed from the bath of suspended PTFE particles, as shown schematically in Figure 4.

The component can then be heated to between about 300 and 350°C in order to sinter the PTFE particles together and fuse them to and coat the walls of the pores in which they are contained, as shown schematically in Figure 5. This allows the anodised layer to retain the surface texture imparted by the anodising process while imparting fluoropolymer functionality over the surface.

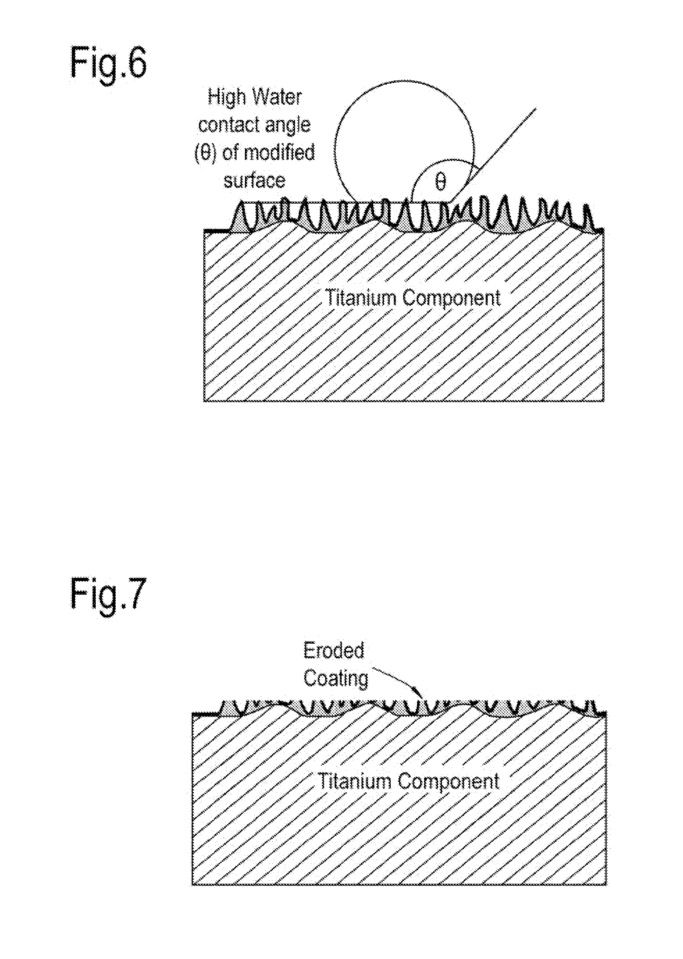

Trials show that such a coating can give the low surface energies required to impart very high water contact angles, typically in excess of 120° and thereby making the surface superhydrophobic. The effect of the surface modification on the water contact angle (θ) is shown schematically in Figure 6.

Advantageously, the combination of the PTFE coating and the anodised layer help to ensure that even if the coating erodes the texture and chemical functionality is substantially retained, giving good coating service life. Figure 7 shows schematically the eroded surface still offering a degree of surface texture and chemical functionality imparted by the exposure of fresh PTFE.

In a development of the process, using a suitable dispersant, nanoparticles can be dispersed in the anodising bath and co-deposited with the growing anodised film. This can give enhanced performance of the coating in erosive conditions where hydrophobicity may otherwise be rapidly distorted or lost.

As an alternative to PTFE, other low surface energy polymers such as FEP, PCTFE particles or silicone rubber could be used to achieve the same effect, although sintering temperatures and infiltration processes would need to be adjusted according to the polymer properties.

Indeed, instead of using a polymer suspension, functionalised polymer nanoparticles could be bonded, infiltrated or adhered to the anodised layer in other ways known to the skilled person.

The anodised layer could alternatively be infiltrated with a liquid fluorinated silane, such as2H-perfluorodecyltrichlorosilane, mono-epoxy-functionalized polydimethylsiloxane or perfluoralkyl silane, or with an organosilesquioxane. This can then be cured appropriately to secure the silane or organosilesquioxane to the nano-textured titanium oxide of the anodised layer.

The anodising process generally imparts a colour change to the surface. As the layer thickens, this typically progresses through straw brown, yellow, blue to purple.

The colour is linked to the thickness of the oxide layer and associated refraction of light. Changes in layer colour can be used as a measure of erosion (e.g. at a fan blade leading edge) and can indicate when an article requires replacement or refurbishment and/or when the surface treatment may no longer be effective.

Advantages of the surface treatment of the present invention are:
● The depth of the surface texture can be controlled and readily increased or decreased easily as required.
● Even if the surface is substantially eroded, it can maintain both micro and nano scale roughness and chemical functionality to give high water contact angles.
● The wetting-resistant coating and anodised layer can be co-continuous and interpenetrating, making the surface effective at repelling water even when damaged or partially eroded.
● The anodised layer and coating do not add significant weight to the article because the anodised layer is provided by the parent material.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

The term "hydrophobic" as used herein, pertains to a surface which in air at room temperature and at atmospheric pressure has a contact angle of greater than 90° with a static droplet of pure water.

The term "superhydrophobic" as used herein, pertains to a surface which in air at room temperature and at atmospheric pressure has a contact angle of greater than 120° with a static droplet of pure water.

The phrase "optionally substituted" as used herein, pertains to a parent group which may be unsubstituted or which may be substituted.

Unless otherwise specified, the term "substituted" as used herein, pertains to a parent group which bears one or more substituents. The term "substituent" is used herein in the conventional sense and refers to a chemical moiety which is covalently attached to, or if appropriate, fused to, a parent group. A wide variety of substituents are well known, and methods for their formation and introduction into a variety of parent groups are also well known.

Alkyl: The term "alkyl" as used herein, pertains to a monovalent moiety obtained by removing a hydrogen atom from a carbon atom of a saturated hydrocarbon compound, which may be aliphatic or alicyclic (cycloalkyl). The alkyl group may be a C₁₋₂₀, C₁₋₁₀, C₃₋₂₀, C₃₋₁₀, C₁₋₈, C₃₋₈, C₁₋₆ or C₃₋₆ alkyl group.

Examples of alkyl groups include, but are not limited to, methyl (C₁), ethyl (C₂), propyl (C₃), butyl (C₄), pentyl (C₅), hexyl (C₆), heptyl (C₇) and octyl (C₈).

An example of a substituted alkyl group includes, but is not limited to, perfluorooctyl (C₈F₁₇).

Examples of linear alkyl groups include, but are not limited to, methyl (C₁), ethyl (C₂), n-propyl (C₃), n-butyl (C₄), n-pentyl (amyl) (C₅), n-hexyl (C₆), n-heptyl (C₇) and n-octyl (C₈).

Examples of branched alkyl groups include iso-propyl (C₃), iso-butyl (C₄), sec-butyl (C₄), tert-butyl (C₄), iso-pentyl (C₅), and neo-pentyl (C₅).

Examples of cycloalkyl groups include, but are not limited to, those derived from:
saturated monocyclic hydrocarbon compounds:
   cyclopropane (C₃), cyclobutane (C₄), cyclopentane (C₅), cyclohexane (C₆), cycloheptane (C₇), methyl cyclopropane (C₄), dimethylcyclopropane (C₅), methylcyclobutane (C₅), dimethylcyclobutane (C₆), methylcyclopentane (C₆), dimethylcyclopentane (C₇) and methylcyclohexane (C₇); and saturated polycyclic hydrocarbon compounds: norcarane (C₇), norpinane (C₇), norbornane (C₇).
Alkenyl: The term "alkenyl" as used herein, pertains to a monovalent moiety obtained by removing a hydrogen atom from a carbon atom of an unsaturated hydrocarbon compound having one or more carbon-carbon double bonds, which may be aliphatic or alicyclic (cycloalkenyl). The alkenyl group may be a C₂₋₂₀, C₂₋₁₀, C₃₋₂₀, C₃₋₁₀, C₂₋₆ or C₃₋₆ alkenyl group.

Examples of alkenyl groups include, but are not limited to, ethenyl (vinyl, -CH=CH₂), 1-propenyl (-CH=CH-CH₃), 2-propenyl (allyl, -CH-CH=CH₂), isopropenyl (1-methylvinyl, -C(CH₃)=CH₂), butenyl (C₄), pentenyl (C₅), and hexenyl (C₆).

An example of a substituted alkenyl group includes, but is not limited to, styrene (-CH=CHPh or -C(Ph)=CH₂).

Examples of cycloalkenyl groups include, but are not limited to, those derived from cyclopropene (C₃), cyclobutene (C₄), cyclopentene (C₅), cyclohexene (C₆), methylcyclopropene (C₄), dimethylcyclopropene (C₅), methylcyclobutene (C₅), dimethylcyclobutene (C₆), methylcyclopentene (C₆), dimethylcyclopentene (C₇) and methylcyclohexene (C₇).

Alkynyl: The term "alkynyl" as used herein, pertains to a monovalent moiety obtained by removing a hydrogen atom from a carbon atom of an unsaturated hydrocarbon compound having one or more carbon-carbon triple bonds, which may be aliphatic or alicyclic (cycloalkynyl). The alkynyl group may be a C₂₋₂₀, C₂₋₁₀, C₃₋₂₀, C₃₋₁₀, C₂₋₆ or C₃₋₆ alkenyl group.

Examples of alkynyl groups include, but are not limited to, ethynyl (ethinyl, -C=CH) and 2-propynyl (propargyl, -CH₂-C=CH).

Heterocyclyl: The term "heterocyclyl" as used herein, pertains to a monovalent moiety obtained by removing a hydrogen atom from a ring atom of a heterocyclic compound. The heterocyclyl group may be a C₃₋₂₀ heterocyclyl group of which from 1 to 10 are ring heteroatoms, a C₃₋₇ heterocyclyl group of which from 1 to 4 are ring heteroatoms, or a C₅₋₆ heterocyclyl group of which 1 or 2 are ring heteroatoms. In one embodiment, the heterocyclyl group is a C₃ heterocyclyl group. In one embodiment, the heterocyclyl group is epoxy. In one embodiment, the heterocyclyl group is obtained by removing a hydrogen atom from a ring carbon atom of a heterocyclic compound.

In one embodiment, the heteroatoms may be selected from O, N or S. In one embodiment the heterocyclyl group is obtained by removing a hydrogen atom from a ring nitrogen atom, where present, of a heterocyclic compound.

In this context, the prefixes (e.g. C₃₋₂₀, C₃₋₇, C₅₋₆, etc.) denote the number of ring atoms, or range of number of ring atoms, whether carbon atoms or heteroatoms. For example, the term "C₅₋₆heterocyclyl", as used herein, pertains to a heterocyclyl group having 5 or 6 ring atoms.

Examples of monocyclic heterocyclyl groups include, but are not limited to, those derived from:
N₁: aziridine (C₃), azetidine (C₄), pyrrolidine (tetrahydropyrrole) (C₅), pyrroline (e.g., 3-pyrroline, 2,5-dihydropyrrole) (C₅), 2H-pyrrole or 3H-pyrrole (isopyrrole, isoazole) (C₅), piperidine (C₆), dihydropyridine (C₆), tetrahydropyridine (C₆), azepine (C₇); O₁: oxirane (C₃), oxetane (C₄), oxolane (tetrahydrofuran) (C₅), oxole (dihydrofuran) (C₅), oxane (tetrahydropyran) (C₆), dihydropyran (C₆), pyran (C₆), oxepin (C₇); S₁: thiirane (C₃), thietane (C₄), thiolane (tetrahydrothiophene) (C₅), thiane (tetrahydrothiopyran) (C₆), thiepane (C₇); O₂: dioxolane (C₅), dioxane (C₆), and dioxepane (C₇); O₃: trioxane (C₆); N₂: imidazolidine (C₅), pyrazolidine (diazolidine) (C₅), imidazoline (C₅), pyrazoline (dihydropyrazole) (C₅), piperazine (C₆); N₁O₁: tetrahydrooxazole (C₅), dihydrooxazole (C₅), tetrahydroisoxazole (C₅), dihydroisoxazole (C₅), morpholine (C₆), tetrahydrooxazine (C₆), dihydrooxazine (C₆), oxazine (C₆); N₁S₁ :thiazoline (C₅), thiazolidine (C₅), thiomorpholine (C₆); N₂O₁: oxadiazine (C₆); O₁S₁ : oxathiole (C₅) and oxathiane (thioxane) (C₆); and, N₁O₁S₁: oxathiazine (C₆).

Examples of substituted monocyclic heterocyclyl groups include those derived from saccharides, in cyclic form, for example, furanoses (C₅), such as arabinofuranose, lyxofuranose, ribofuranose, and xylofuranse, and pyranoses (C₆), such as allopyranose, altropyranose, glucopyranose, mannopyranose, gulopyranose, idopyranose, galactopyranose, and talopyranose.

Aryl: The term "aryl", as used herein, pertains to a monovalent moiety obtained by removing a hydrogen atom from an aromatic ring atom of an aromatic compound. The aryl group may be a C₃₋₂₀, C₅₋₇ or C₅₋₆ aryl group.

In this context, the prefixes (e.g. C₃₋₂₀, C₅₋₇, C₅₋₆, etc.) denote the number of ring atoms, or range of number of ring atoms, whether carbon atoms or heteroatoms. For example, the term "C₅₋₆ aryl" as used herein, pertains to an aryl group having 5 or 6 ring atoms.

The ring atoms may be all carbon atoms, as in "carboaryl groups".

Examples of carboaryl groups include, but are not limited to, those derived from benzene (i.e. phenyl) (C₆), naphthalene (C₁₀), azulene (C₁₀), anthracene (C₁₄), phenanthrene (C₁₄), naphthacene (C₁₈), and pyrene (C₁₆).

Examples of aryl groups which comprise fused rings, at least one of which is an aromatic ring, include, but are not limited to, groups derived from indane (e.g.2,3-dihydro-1H-indene) (C₉), indene (C₉), isoindene (C₉), tetraline (1,2,3,4-tetrahydronaphthalene (C₁₀), acenaphthene (C₁₂), fluorene (C₁₃), phenalene (C₁₃), acephenanthrene (C₁₅), and aceanthrene (C₁₆).

Alternatively, the ring atoms may include one or more heteroatoms, as in "heteroaryl groups". Examples of monocyclic heteroaryl groups include, but are not limited to, those derived from: N₁: pyrrole (azole) (C₅), pyridine (azine) (C₆); O₁: furan (oxole) (C₅); S₁: thiophene (thiole) (C₅); N₁O₁ :oxazole (C₅), isoxazole (C₅), isoxazine (C₆); N₂O₁: oxadiazole (furazan) (C₅); N₃O₁: oxatriazole (C₅); N₁S₁ : thiazole (C₅), isothiazole (C₅); N₂: imidazole (1,3-diazole) (C₅), pyrazole (1,2-diazole) (C₅), pyridazine (1,2-diazine) (C₆), pyrimidine (1,3-diazine) (C₆) (e.g., cytosine, thymine, uracil), pyrazine (1,4-diazine) (C₆); N₃: triazole (C₅), triazine (C₆); and, N₄: tetrazole (C₅).

Examples of heteroaryl which comprise fused rings, include, but are not limited to: C₉ (with 2 fused rings) derived from benzofuran (O₁), isobenzofuran (O₁), indole (N₁), isoindole (N₁), indolizine (N₁), indoline (N₁), isoindoline (N₁), purine (N₄) (e.g., adenine, guanine), benzimidazole (N₂), indazole (N₂), benzoxazole (N₁O₁), benzisoxazole (N₁O₁), benzodioxole (O₂), benzofurazan (N₂O₁), benzotriazole (N₃), benzothiofuran (S₁), benzothiazole (N₁S₁), benzothiadiazole (N₂S); C₁₀ (with 2 fused rings) derived from chromene (O₁), isochromene (O₁), chroman (O₁), isochroman (O₁), benzodioxan (O₂), quinoline (N₁), isoquinoline (N₁), quinolizine (N₁), benzoxazine (N₁O₁), benzodiazine (N₂), pyridopyridine (N₂), quinoxaline (N₂), quinazoline (N₂), cinnoline (N₂), phthalazine (N₂), naphthyridine (N₂), pteridine (N₄); C₁₁ (with 2 fused rings) derived from benzodiazepine (N₂); C₁₃ (with 3 fused rings) derived from carbazole (N₁), dibenzofuran (O₁), dibenzothiophene (S₁), carboline (N₂), perimidine (N₂), pyridoindole (N₂); and, C₁₄ (with 3 fused rings) derived from acridine (N₁), xanthene (O₁), thioxanthene (S₁), oxanthrene (O₂), phenoxathiin (O₁S₁), phenazine (N₂), phenoxazine (N₁O₁), phenothiazine (N₁S₁), thianthrene (S₂), phenanthridine (N₁), phenanthroline (N₂), phenazine (N₂).

The above groups, whether alone or part of another substituent, may themselves optionally be substituted with one or more groups selected from themselves and the substituents listed below.
Halo: -F, -Cl, -Br, and -I.

Ester: -C(=O)OR (carboxylate, carboxylic acid ester, oxycarbonyl) or -OC(=O)R (acyloxy, reverse eter), wherein R is an ester substituent, for example, an alkyl group, an alkenyl group, an alkynyl group, a heterocyclyl group, or an aryl group, preferably an alkyl group or an alkenyl group, most preferably an alkenyl group.

Examples of ester groups include, but are not limited to, -C(=O)OCH₃, -C(=O)OCH₂CH₃, -C(=O)OC(CH₃)₃, and -C(=O)OPh.

Other examples of ester groups include, but are not limited to, -OC(=O)CH₃ (acetoxy), -OC(=O)CH₂CH₃, -OC(=O)C(CH₃)₃, -OC(=O)Ph, -OC(=O)CH₂Ph, -OC(=O)CH=CH₂ (acrylate) and -OC(=O)C(CH₃)=CH₂ (methacrylate).

Amino: -NR¹R², wherein R¹ and R² are independently amino substituents, for example, hydrogen, an alkyl group (also referred to as alkylamino or dialkylamino), an alkenyl group, an alkynyl group, a heterocyclyl group, or an aryl group, preferably H or an alkyl group, or, in the case of a "cyclic" amino group, R¹ and R², taken together with the nitrogen atom to which they are attached, form a heterocyclic ring having from 4 to 8 ring atoms. Amino groups may be primary (-NH₂), secondary (-NHR¹), or tertiary (-NHR¹R²), and in cationic form, may be quaternary (-⁺NR¹R²R³). Examples of amino groups include, but are not limited to, -NH₂, -NHCH₃, -NHC(CH₃)₂, -N(CH₃)₂, -N(CH₂CH₃)₂, and -NHPh. Examples of cyclic amino groups include, but are not limited to, aziridino, azetidino, pyrrolidino, piperidino, piperazino, morpholino, and thiomorpholino.

Anhydride: -C(=O)OC(=O)R, wherein R is independently an anhydride substituent, for example an alkyl group, an alkenyl group, an alkynyl group, a heterocyclyl group, or an aryl group, preferably an alkyl group.

Cyanato: -OCN.

lsocyanato: -NCO.

Cyano (nitrile, carbonitrile): -CN.

Phosphino (phosphine): -PR₂, wherein R is a phosphino substituent, for example, -H, an alkyl group, an alkenyl group, an alkynyl group, a heterocyclyl group, or an aryl group, preferably -H, an alkyl group, or an aryl group. Examples of phosphino groups include, but are not limited to, -PH₂, -P(CH₃)₂, -P(CH₂CH₃)₂, -P(t-Bu)₂, and -P(Ph)₂.

Mercapto: -SR, wherein R is a mercapto substituent, for example, -H, an alkyl group, an alkenyl group, an alkynyl group, a heterocyclyl group, or an aryl group, preferably -H, an alkyl group, or an aryl group. Examples of mercapto groups include, but are not limited to, -SH, -SCH₃, -SCH₂CH₃, -S-t-Bu, and -SPh.

## Claims

**1.** An article having:
an anodised titanium or titanium alloy surface layer containing pores which form recesses opening to the outside of the layer, and
a wetting-resistant coating formed on the anodised surface layer, the coating penetrating the pores but retaining the recesses to make the surface of the article hydrophobic and thereby restrict accumulation of ice.

**2.** An article according to claim 1, wherein the pores occupy at least 30 volume % of the anodised surface layer.

**3.** An article according to claim 1 or 2, wherein the coating comprises fluorinated polymer.

**4.** An article according to claim 3, wherein the coating comprises polytetrafluoroethylene.

**5.** An article according to any one of the previous claims which is a component of a gas turbine engine.

**6.** An article according to claim 5 which is a fan blade, a compressor inlet guide vane, a fan outlet guide vane, a compressor blade or a compressor vane.

**7.** An article according to any previous claim, wherein the anodised surface layer has roughness on both a nano length scale and micro length scale.

**8.** An article according to any previous claim, wherein the layer comprises a pattern of generally columnar asperities.

**9.** An article according to any previous claim, wherein the anodised surface layer has a thickness in the range from 2nm, to 2µm.

**9.** An article according to any preceding claim, wherein the wetting-resistant coating has a thickness of at between 0.5 and 10nm.

**10.** A method of surface treating an article having a titanium or titanium alloy surface, the method comprising the steps of:
anodising the surface of the alloy to produce an anodised surface layer containing pores which form recesses opening to the outside of the layer, and
forming a wetting-resistant coating on the anodised surface layer, the coating penetrating the pores but retaining the recesses to make the surface hydrophobic and thereby restrict accumulation of ice.

**11.** A method according to claim 10, wherein the step of forming the wetting-resistant coating comprises applying a suspension of PTFE particles to the anodised surface layer such that the PTFE particles infiltrating the pores, and heating the article to fuse the infiltrating PTFE particles into a coating which penetrates the pores but retains the recesses.

**12.** A method according to claim 10 or 11, wherein the anodising of the surface is in a sulphuric and/or phosphoric acid.

**13.** A method according to claim 12, wherein the anodising of the surface is performed using a dilute mixture of sulphuric and phosphoric acid.

**14.** A method according to any one of claims 10 to 13, wherein an alternating anodising current is applied.
